# EUROPEAN PATENT APPLICATION

(11) **EP 1 494 133 A2**
(43) Date of publication of application: **05.01.2005**
(21) Application number: 03257397.4
(22) Date of filing: 24.11.2003
(51) Int. Cl.: G06F 17/30

(54) **System and method of placing a website in at least one search result list**

(30) Priority: 01.07.2003 US 610729
(71) Applicant: Yahoo Inc., Sunnyvale, CA 94089 (US)
(72) Inventor: Roslansky, Ryan, Palo Alto, CA 94301 (US); Braccia, Andrew, Menlo Park, CA 94025 (US); Lu, Qi, Saratoga, CA 95070 (US)
(74) Representative: Haines, Miles John

(57) **Abstract**

A system and method is provided for qualifying search listings for placement in at least one search result list and ordering the search listings according to an algorithm. Specifically, a searching device is adapted to received items of information, such as search listings (e.g., www.vahoo.com, etc.), search terms (e.g., "cars," "beauty supplies," etc.) and monetary amounts (e.g., $1.00, etc.), from a plurality of promoting devices, receive a search inquiry (i.e., a search term) from a reception device, and provide (in response thereto) at least one search result list including search listings (i) associated with the search inquiry and (ii) qualified for placement in the search result list. In other words, if the search term linked to the search listing is the same as (or substantially similar to) the search inquiry, then the first prong is met. Furthermore, if a predetermined number of monetary amounts (i.e., as linked to a predetermined number of search listings associated with the search inquiry) are not higher than the monetary amount linked to the search listing, then the second prong is met and the search listing is qualified for placement. Thus, only a predetermined number of search listings (e.g., three, five, etc.) that are both (i) associated with the search inquiry and (ii) linked to the highest monetary amounts are qualified for placement in the search result list. Once the search listings are qualified for placement in the search result list, the searching device is adapted to arrange the qualified search listings according to an algorithm (e.g., randomly, according to relevance, according to monetary amounts, etc.).

## Description

### COPYRIGHT NOTICE

This patent document contains material subject to copyright protection. The copyright owner, Yahoo!, has no objection to the reproduction of this patent document or any related materials, as they appear in the files of the Patent and Trademark Office of the United States or any other country, but otherwise reserves all rights whatsoever.

### BACKGROUND OF THE INVENTION

### 1. Field of the Invention

The present invention relates to placing a search listing in at least one search result list, or more particularly, to a system and method of using at least a monetary amount linked to a search listing to qualify the search listing for placement in a preferred location of at least one search result list and ordering the search listings in the preferred location in accordance with an algorithm.

### 2. Description of Related Art

Wide area networks, such as the Internet, are useful for retrieving information from (or providing information to) devices connected to the network. A common drawback with such a network, however, is that network users (i.e., reception devices) may have trouble locating relevant information. Similarly, information providers (i.e., promoting devices) may have trouble providing information to relevant users (i.e., a particular group of users).

One solution to this drawback came with the advent of search engines. A search engine is a search application capable of receiving a search term (e.g., "dogs," "beauty supplies," etc.) from a network user and providing the user, in response thereto, with a search result list containing information (or hyperlinks to information) theoretically relevant to the search term. Traditional search applications locate relevant information by using an automated crawling application (e.g., a "web crawler") and a relevancy algorithm to automatically search the network for relevant information. Alternately, a human being (e.g., a search engine editor) can be used to manually scan the network for relevant information. One drawback of these two methods, however, is that they do not enable an information provider to provide information to particular users. For example, these methods do not enable an automobile dealer to provide information directly to network users looking to buy a car.

In contradistinction to traditional search applications, commercialized search applications locate relevant information by selling discrete positions in a particular search result list (i.e., a search result list responsive to a particular search term). For example, the first position in a particular search result list may be auctioned to a highest bidder, the second position may be auctioned to a second highest bidder, etc. While this method enables an information provider to provide information to a particular user (i.e., a user entering a particular search term), it may fail to provide the user with the most relevant information. This is because information in the search result list (i.e., search listings) are ordered according to bid amounts, not relevancy.

Thus, a need exists for a search application that provides more relevant information (i.e., search listings) to a network user by either (i) enabling information providers to purchase a placement in a preferred location of a search result list (as opposed to purchasing a discrete placement position) and ordering the preferred location in accordance with an algorithm independent of the purchase amount, or (ii) enabling information providers to purchase at least one placement in a preferred location of, or at least one discrete position in, multiple search result lists.

### SUMMARY OF THE INVENTION

The present invention provides a system and method of qualifying a search listing for placement in a preferred location of at least one search result list and ordering the preferred location according to an algorithm. In a preferred embodiment of the present invention, a searching device is adapted to communicate with a plurality of reception devices and a plurality of promoting devices via a wide area network, such as the Internet. Specifically, the searching device is adapted to (i) receive items of information, such as search listings (e.g., www.yahoo.com, etc.), search terms (e.g., "cars," "beauty supplies," etc.) and monetary amounts (e.g., $1.00, etc.), from the promoting devices, (ii) receive a search inquiry (i.e., a search term) from one of the reception devices, (iii) qualify (in response thereto) search listings for placement in at least one search result list, and (iv) arrange the qualified search listings according to an algorithm (e.g., randomly, according to relevance, according to monetary amounts, etc.).

One embodiment of the searching system includes a search server connected to the wide area network, a database for storing received items of information, a promoting application adapted to communicate with the database and the plurality of promoting devices via the search server, and a searching application adapted to communicate with the database and the plurality of reception devices via the search server. In this embodiment, the promoting application is adapted to receive items of information, such as search listings (e.g., www.yahoo.com, etc.), search terms (e.g., "cars," "beauty supplies," etc.) and monetary amounts (e.g., $1.00, etc.), from the plurality of promoting devices, wherein each search listing is associated (or linked) to at least one corresponding monetary amount and one corresponding search term.

Furthermore, according to this embodiment, the searching application is adapted to receive a search inquiry (i.e., a search term) from one of the reception devices and provide, in response thereto, at least one search result list including each search listing received from the plurality of promoting devices that is (i) associated with the search inquiry and (ii) qualified for placement in the search result list. In other words, if the search term linked to the search listing is the same as (or substantially similar to) the search inquiry, then the first prong is met. Furthermore, if a predetermined number of monetary amounts (i.e., as linked to a predetermined number of search listings associated with the search inquiry) are not higher than the monetary amount linked to the search listing, then the second prong is met and the search listing is qualified for placement in the search result list. Thus, only a predetermined number of search listings (e.g., three, five, etc.) that are both (i) associated with the search inquiry and (ii) linked to the highest monetary amounts are qualified for placement in the search result list.

After determining the qualified search listings, the searching application is further adapted to place the qualified search listings in a preferred location (e.g., an upper-most plurality of placement positions, etc.) of at least one search result list and to arrange (or order) the qualified search listings in accordance with an algorithm. In one embodiment of the present invention, the algorithm is independent of any monetary amount. Thus, for example, the algorithm may be adapted to arrange the qualified search listings randomly or according to relevancy. In another embodiment of the present invention, the algorithm is based (either in part or in whole) on the monetary amounts linked to the qualified search listings.

While the monetary amounts are used to qualify search listings for placement in a search result list and, in certain embodiments, to arrange the qualified search listings, the monetary amounts are further used to charge for the performance of a particular action on or in response to the search listings (e.g., placing a search listing in a search result list, interacting with (e.g., clicking-through) a search listing, etc.). Thus, for example, a promoter of a search listing may be charged a corresponding monetary amount if the search listing is placed in a search result list or if a searcher clicks-through the search listing (e.g., to receive the promoter's website, etc.). Furthermore, in one embodiment of the present invention, the monetary amounts are bid amounts provided by the plurality of promoting devices. In another embodiment of the present invention, the monetary amounts are fixed monetary amounts that are provided by the promoting application and selected (or accepted) by the plurality of promoting devices.

In one embodiment of the present invention, the searching application is further adapted to provide a web page ("first-search-result web page") to the reception device that includes at least a portion (e.g., an originating portion) of one search result list. Specifically, the search result list includes qualified search listings (arranged according to the algorithm) located in a preferred location. In another embodiment of the present invention, the search result list further includes non-qualified search listings (e.g., non-paid search listings) located in a non-preferred location (i.e., the remaining placement positions).

In another embodiment of the present invention, the searching application is further adapted to provide a first-search-result web page that includes two search result lists -- i.e., at least an originating portion of a primary search result list and a sponsored search result list. Specifically, the primary search result list includes only non-qualified search listings (e.g., non-paid search listings) arranged according to relevance and the sponsored search result list includes only qualified search listings arranged according to an algorithm (e.g., randomly, according to relevance, according to monetary amounts, etc.).

In another embodiment of the present invention, the searching application is further adapted to provide a first-search-result web page that includes a plurality of search result lists -- i.e., at least an originating portion of a primary search result list, a first sponsored search result list and a second sponsored search result list. Specifically, the primary search result list includes only non-qualified search listings (e.g., non-paid search listings) arranged according to relevance and the sponsored search result lists include only qualified search listings arranged according to at least one algorithm (e.g., randomly, according to relevance, according to monetary amounts, etc.).

In this embodiment, the promoting application may be further adapted to receive search-result-list data (e.g., search-result-location data, search-result-preference data, etc.) from the plurality of promoting device, where the search-result-location data identifies at least one search result list and the search-result-preference data identifies at least one preferred search result list. The search-result-list data is used by the searching application to qualify search listings for placement in a particular search result list.

In another embodiment of the present invention, the searching application is further adapted to provide a first-search-result web page that includes a primary search result list and four sponsored search result lists -- i.e., a first search result list, a second search result list, a third search result list and a fourth search result list. Specifically, the primary search result list includes only non-qualified search listings (e.g., non-paid search listings) arranged according to relevance and the sponsored search result lists include only qualified search listings arranged according to at least one algorithm. As with the previous embodiment, if the promoting application is adapted to receive search-result-list data, then the search-result-list data will be used to qualify search listings for placement in a particular search result list.

A more complete understanding of the system and method for placing a search listing in a preferred location of at least one search result list and ordering the preferred location according to an algorithm will be afforded to those skilled in the art, as well as a realization of additional advantages and objects thereof, by a consideration of the following detailed description of the preferred embodiment. Reference will be made to the appended sheets of drawings which will first be described briefly.

### BRIEF DESCRIPTION OF THE DRAWINGS

Figure 1 is a high level architectural drawing of a search environment including a searching system that operates in accordance with one embodiment of the present invention.
Figure 2 illustrates items of information received and stored in an exemplary embodiment of the present invention.
Figure 3, in accordance with one embodiment of the present invention, illustrates a first-search-result web page including a search result list.
Figure 4, in accordance with another embodiment of the present invention, illustrates a first-search-result web page including a sponsored search result list located above a primary search result list.
Figure 5, in accordance with another embodiment of the present invention, illustrates a first-search-result web page including a first sponsored search result list located above a primary search result list and a second sponsored search result list located below the primary search result list.
Figures 5A and 5B illustrate items of information received and stored in two exemplary embodiments of the present invention.
Figure 6, in accordance with another embodiment of the present invention, illustrates a first-search-result web page including a first sponsored search result list located above a primary search result list, a second sponsored search result list located below the primary search result list, a third search result list located to the left of the primary search result list and a fourth search result list located to the right of the primary search result list.
Figure 6A illustrates items of information received and stored in an exemplary embodiment of the present invention.
Figure 7 illustrates a method of qualifying a search listing for placement in at least one search result list in accordance with one embodiment of the present invention.

### DETAILED DESCRIPTION OF THE PREFERRED EMBODIMENT

The present invention provides a system and method of qualifying a search listing for placement in a preferred location of at least one search result list and ordering the preferred location according to an algorithm. In the detailed description that follows, like element numerals are used to describe like elements illustrated in one or more figures.

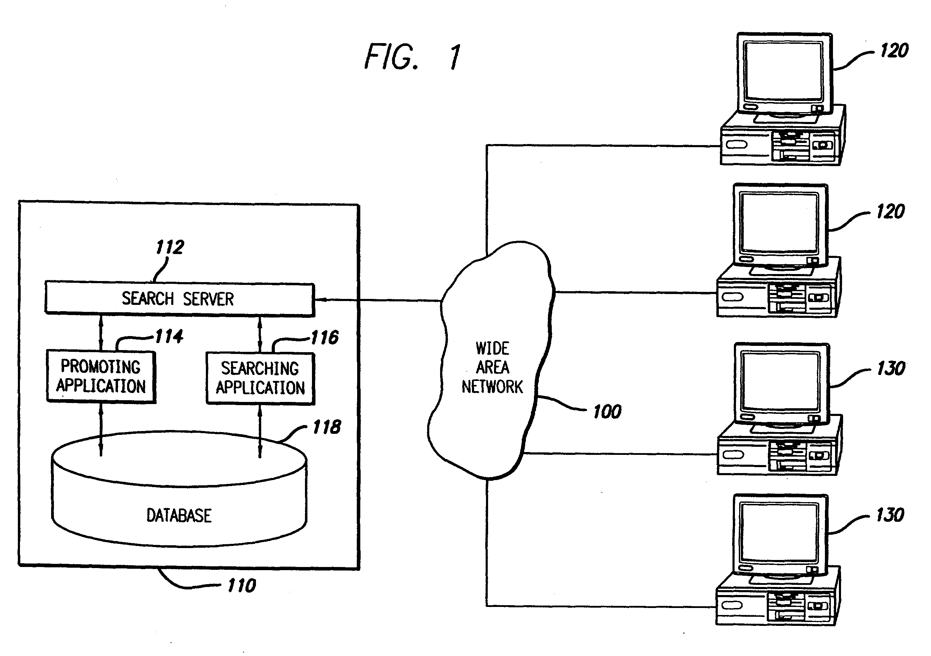

Preferred embodiments of the present invention operate in accordance with a plurality of network devices, such as a searching system, a plurality of reception devices and a plurality of promoting devices. Specifically, as shown in Figure 1, a searching device 110 is adapted to communicate with a plurality of reception devices 120 and a plurality of promoting device 130 via a wide area network 100, such as the Internet. It should be appreciated that the reception devices and promoting devices depicted herein (e.g., 120, 130) include, but are not limited to, personal computers, television set-top boxes, telephones, consumer appliances, personal digital assistances (PDAs), wireless entertainment devices (WEDs), wireless information devices (WIDs), and all other physically and wirelessly connected network devices generally known to those skilled in the art. It should further be appreciated that the location and/or number of components depicted in Figure 1 are merely provided to illustrate the environment in which the present invention operates, and not to limit the present invention. Thus, for example, a search environment including additional reception devices 120, promoting devices 130 and/or searching systems 110 is within the spirit and scope of the present invention.

One embodiment of the searching system 110 is shown in Figure 1. Specifically, the searching system 110 includes a search server 112 connected to the wide area network 100, a database 118 for storing received items of information, a promoting application 114 adapted to communicate with the database 118 and the plurality of promoting devices via the search server 112, and a searching application 116 adapted to communicate with the database 118 and the plurality of reception devices via the search server 112. It should be appreciated the database depicted in Figure 1 (i.e., 118) includes, but is not limited to, RAM, cache memory, flash memory, magnetic disks, optical disks, removable disks, SCSI disks, IDE hard drives, tape drives, smart cards, and all other types of data storage devices (and combinations thereof, such as RAID devices) generally known to those skilled in the art. It should further be appreciated that the promoting and/or searching applications depicted in Figure 1 (i.e., 114, 116) may exist as a single application or multiple applications located entirely or partially on the searching system 110. It should also be appreciated that the location and/or number of components depicted in the searching system 110 are merely provided to illustrate the environment in which the present invention may operate, and not to limit the present invention. Thus, for example, a searching system 110 that includes additional components (e.g., multiple databases 118, etc.) and/or components located external to the searching system 110 (e.g., the search server 112, etc.) is within the spirit and scope of the present invention.

Referring to Figure 1, the promoting application 114 is adapted to receive items of information, such as search listings (e.g., www.yahoo.com, etc.), search terms (e.g., "cars," "beauty supplies," etc.) and monetary amounts (e.g., $1.00, etc.), from the plurality of promoting devices 130, wherein each search listing is associated with at least one corresponding monetary amount and one corresponding search term. In a preferred embodiment of the present invention, the search listing is either the actual information to be provided to a reception device or address information as to where on the network the actual information is located. For example, with respect to the Internet, the search listing may either be the actual information itself (e.g., a banner ad, etc.) or it may include (or be associated with) the address, or Uniform Resource Locator (URL), identifying where on the Internet the actual information (e.g. a Web Page, a Website, a PDF, etc.) is located or can be retrieved. Furthermore, in the preferred embodiment of the present invention, the search term is any word, symbol, phrase or term capable of identifying (or being associated with) at least one search listing. It should be appreciated that while the promoting application 114 is adapted to receive items of information (e.g., search terms, monetary amounts, etc.), the items may have previously been selected or entered by the plurality of promoting devices. For example, a promoting application adapted to provide one or a list of items (e.g., search terms, monetary amounts, etc.) to a promoting device, thus enabling the promoting device to select (and the searching system to receive) at least one of the items presented, is within the spirit and scope of the present invention. Moreover, a promoting application adapted to enable a promoting device to enter and submit items of information (e.g., search terms, monetary amounts, etc.) is also within the spirit and scope of the present invention.

In an embodiment of the present invention, the monetary amount is any value, number or amount that is directly, indirectly, or symbolically related to currency (e.g., dollars, cents, etc.) or worth to a promoter (e.g., units, points, etc.). Furthermore, in one embodiment of the present invention, the monetary amount corresponds to an amount that the promoting device (or the promoter) will pay if the search listing is placed in a search result list. Thus, for example, if the search listing is placed in three search result lists (e.g., three search results lists on one web page, one search result list on three web pages, etc.), then three monetary amounts (i.e., three times the monetary amount) will be charged to the promoter (e.g., billed to the promoter, deducted from a pre-established account, etc.). In another embodiment of the present invention, the monetary amount corresponds to an amount that the promoting device (or promoter) will pay if the search listing is placed in a search result list and subsequently interacted with by a requesting reception device (or a searcher). Thus, for example, if the search listing is placed in a search result list and subsequently interacted with by a searcher (e.g., the searcher clicks-thorough to the actual information, etc.), then the monetary amount linked to the search listing will be charged to the promoter (e.g., billed to the promoter, deducted from a pre-established account, etc.).

It should be appreciated that a monetary amount corresponding to different actions (e.g., a searcher purchasing a product from the promoter's website, etc.) and/or divided amongst multiple actions (e.g., a first portion of the monetary amount corresponds to placing a search listing in a search result list and a second portion of the monetary amount corresponds to a subsequent interaction with the search listing, etc.) is within the spirit and scope of the present invention. It should also be appreciated that a monetary amount (or a portion thereof) may be linked to demographic information (e.g., males between the ages of 18-25, women who live in California, people who have bought similar products, etc.). In this embodiment, the monetary amount (or a portion thereof) is only charged if the requisite action is taken (e.g., the corresponding search listing is placed, interacted with, etc.) and the searcher's profile matches the demographic information. It should further be appreciated that, if monetary amounts are being deducted from a pre-established account, making such deductions in real-time (i.e., immediately after the triggering event occurs) or after a pre-established delay (e.g., to verify the validity of the triggering event, etc.) are within the spirit and scope of the present invention. For example, algorithms known in the art may be used to detect fraudulent actions (e.g., robotic click-throughs, etc.) either before monetary amounts are deducted (e.g., during the pre-established delay) or after monetary amounts are deducted (e.g., crediting the account if fraudulent actions are detected, etc.).

In another embodiment of the present invention, the monetary amounts received and stored in the database 118 are used to qualify search listings for placement in at least one search result list and, in certain embodiments, to arrange the qualified search listings. Therefore, because only a predetermined number of search listings (e.g., three, five, etc.) are placed in each search result list, the promoting devices (or more particularly the promoters operating the promoting devices) are in essence competing to have their search listings qualified for placement in a particular search result list (i.e., a search result list responsive to a particular search term).

Accordingly, in one embodiment of the present invention, the promoting application 114 is further adapted to host an electronic auction and enable the plurality of promoting devices 130 to bid on particular search terms (i.e., bid to have their search listings qualified for placement in a particular search result list). For example, a promoting device interested in having its search listing placed in a search result list responsive to the search term "cars" (i.e., a "cars" search result list) could bid (e.g., enter or select) a monetary amount on the search term "cars." Thus, in this embodiment, the monetary amounts received by the promoting applications 114 are bids. It should be appreciated that such an embodiment enables the promoting devices to determine the monetary amount(s) associated with being placed in a particular search result list. In other words, by being able to bid (or outbid another) for placement in a particular search result list, it is the promoting devices that set the market value of being placed.

In another embodiment of the present invention, the promoting application 114 is further adapted to provide at least one fixed monetary amount to a promoting device 130, such that the fixed monetary amount is associated with a particular search term. Thus, for example, a promoting device interested in having its search listing placed in a "cars" search result list could select the fixed monetary amount (or one of the fixed monetary amounts) associated with the search term "cars." Thus, in this embodiment, the monetary amounts received by the promoting applications 114 are fixed monetary amounts. It should be appreciated that the fixed monetary amounts (at least initially) may be derived randomly, from available market data (e.g., what promoters are currently paying for like services, etc.) or derived using known market theories (e.g., inventory turnover ratio theory ((CV(P,T) - CV(P', T)) x ACR(T) x APP(T) x AMG(T) x ADC(T)), etc.). With respect to the latter, factors may include average conversion ratio ("ACR(T)"), average purchasing price ("APP(T)"), average margin ("AMG(T)"), average distribution cost percentage ("ADC(T)"), current click velocity ("CV(P,T)"), and prior click velocity ("CV(P',T)"). It should be appreciated that such an embodiment enables the promoting application (as opposed to the promoting devices) to determine the monetary amount(s) associated with being placed in a particular search result list. In other words, by fixing the amount(s) for placement in a particular search result list, it is the promoting application that sets the market value of being placed.

In another embodiment of the present invention, the fixed monetary amount(s) are associated with discrete time periods (e.g., a pre-determined number of minutes, hours, days, weeks, click-throughs, etc.) and are automatically adjusted. In one embodiment of the present invention, subsequent time periods include at least one fixed monetary amount higher than the highest qualifying amount from the immediately previous time period. For example, assume that five fixed monetary amounts (e.g., 60¢, 70¢, 80¢, 90¢ and $1.00) were provided during a first time period (e.g., a first minute, a first day, etc.) and in response to a particular search term inquiry (e.g., "cars"). Further assume that the top three monetary amounts accepted (i.e., the ones qualifying for placement in a search result list) were the fixed monetary amounts of 80¢, 90¢ and $1.00. Then, during a second time period (e.g., a subsequent minute, a subsequent day, etc.), the five fixed monetary amounts provided in response to the same search inquiry (e.g., "cars") would include at least one fixed monetary amount higher than the highest qualifying amount for the first time period (i.e., $1.00.). In other words, during the second time period, at least one of the five fixed monetary amounts would be higher than $1.00. In another embodiment of the present invention, fixed monetary amounts for a particular time period are offered before the particular time period begins (e.g., a day before time period begins, etc.) and are reduced if certain ones are not accepted during a pre-determined period of time (e.g., the first twelve hours of that day, etc.). In this embodiment, the fixed monetary amounts are reduced until they hit a lower limit or are accepted (i.e., purchased). It should be appreciated that such an embodiment enables promoting devices to continuously (e.g., every day, every week, etc.) acquire more advantageous placement positions (e.g., a preferred location, etc.) without having to participate in an electronic auction.

In reference to these three embodiments, it should be appreciated that monetary amounts received for the same search term may either be equal or different in value. Thus, for example, a promoting device adapted to receive or prohibit equal bids for the same search term is within the spirit and scope of the present invention. It should further be appreciated that the promoting application 114 may (or may not) be adapted to adjust the monetary amounts linked to the qualified search listings to be equal to the lowest qualifying monetary amount, so as not to penalize overbidding or overpaying.

Referring back to Figure 1, the searching application 116 is adapted to receive a search inquiry (i.e., search term) from one of the plurality of reception devices 120 and provide, in response thereto, at least one search result list. In an embodiment of the present invention, each search listing received by the promoting device 130 and stored in the database 118 is placed in the search result list if (i) the search listing is associated with the search inquiry, and (ii) the search listing is qualified for placement in the search result list. In other words, if the search term stored in the database 118 and linked to the search listing is the same as (or substantially similar to) the search inquiry (i.e., the search term provided by the reception device 120), then the first prong is met. Furthermore, if a predetermined number of monetary amounts (i.e., as linked to a predetermined number of search listings associated with the search inquiry) are not higher than the monetary amount stored in the database 118 and linked to the search listing, then the second prong is met and the search listing is qualified for placement in the search result list.

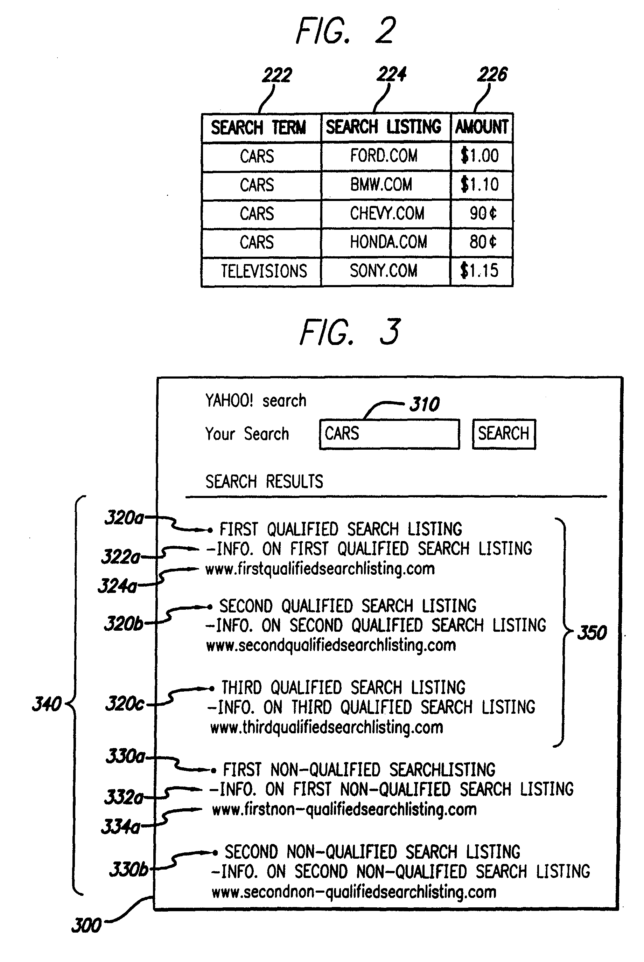

For example, Figure 2 illustrates the reception and storage of five exemplary sets of information (i.e., a search term 222, a search listing 224 and a monetary amount 226). Specifically, the promoting device 114 has received four search listings and corresponding monetary amounts for the search term "cars" and one search listing and a corresponding monetary amount for the search term "televisions." If the searching application 114 is adapted to qualify, at most, three paid search listings for placement in a search result list (i.e., three being the predetermined number), and the searching application 114 receives a "cars" search inquiry from a reception device 120, then the searching application 114 would qualify www.ford.com, www.bmw.com and www.chevy.com for placement in the search result list. This is because the search inquiry was "cars" (thus eliminating the www.sony.com search listing) and three monetary amounts linked to search listings associated with the search inquiry were higher than 80¢ (thus eliminating the www.honda.com search listing). In other words, only a predetermined number of search listings (in this case three) that are both (i) associated with the search inquiry, and (ii) linked to the highest monetary amounts are qualified for placement in the search result list.

It should be appreciated that the present invention is not limited to placing any particular predetermined number of paid search listings in a search result list, and that the actual number of paid search listings qualified for placement in a particular search result list may depend on multiple factors (e.g., the selection of a particular predetermined number, the availability of qualified search listings, etc.). It should further be appreciated that the present invention is not limited to the use of monetary values to qualify search listings for placement in a search result list, and that additional information may be used. For example, in the case of a tie (i.e., equal monetary amounts), historical information (e.g., promoter's payment history, promoter's account balance, duration of promoter's participation, duration of the search listing's participation, etc.) may be used to qualify at least one of the search listings.

Referring back to Figure 1, the searching application 116 is further adapted to place the qualified search listings in a preferred location (e.g., an upper-most plurality of placement positions, etc.) of at least one search result list and to arrange (or order) the qualified search listings in accordance with an algorithm. In one embodiment of the present invention, the algorithm is independent of any monetary amount. Thus, for example, the algorithm may be adapted to arrange the qualified search listings randomly or according to relevance. In other words, with respect to the latter, at least one more-relevant qualified search listing may be placed above at least one less-relevant qualified search listing in a search result list. In another embodiment of the present invention, the algorithm is based (either in part or in whole) on the monetary amounts linked to the qualified search listings. For example, a qualified search listing linked to a higher monetary amount may be placed above a qualified search listing linked to a lower monetary amount. It should be appreciated that the searching application 116 may further be adapted to place non-qualified search listings (e.g., non-paid search listings) in at least one search result list if the non-qualified search listings are relevant to the search inquiry. Thus, for example, a search result list including only non-qualified search listings may include at least one search listing found to be relevant to the search inquiry, regardless of whether the search listing is further linked to a monetary amount in the database 118 or qualified for placement in the preferred location.

In an embodiment of the present invention, the searching application is further adapted to provide a web page ("first-search-result web page") to the reception device that includes at least a portion of the search result list. For example, Figure 3 illustrates a first-search-result web page 300 including at least a portion (i.e., an originating portion) of one search result list 340 generated in response to a search inquiry 310. In this embodiment, a predetermined number of qualified search listings (e.g., three) are placed in a preferred location 350 of the search result list 340 and arranged according to an algorithm. Thus, the first qualified search listing 320a (according to the algorithm) is placed in a first placement position of the search result list 340, a second qualified search listing 320b is placed in a second placement position, etc. In an embodiment of the present invention, each qualified search listing includes a hyperlink to the actual information. In other words, each search listing includes the network address as to where the actual information is located, thus enabling the searcher (i.e., the operator of the reception device) to click on the search listing (i.e., the hyperlink) to retrieve the actual information.

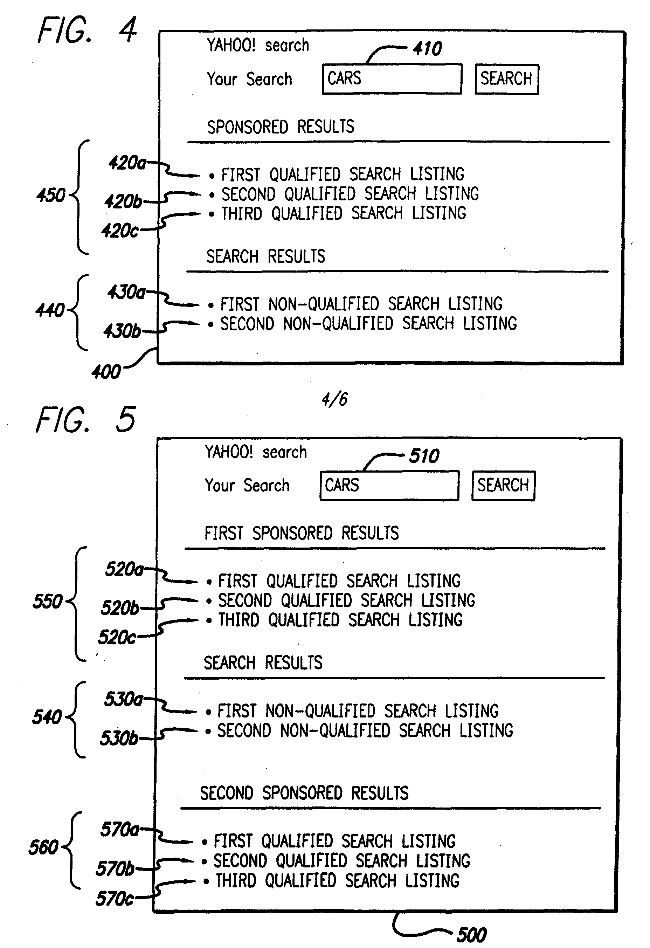

If the predetermined number of qualified search listings is three (as illustrated in Figure 3), the fourth placement position of the search result list 340 (e.g., the first non-preferred location) is occupied by a first non-qualified search listing 330a, and the fifth placement position (e.g., the second non-preferred location) is occupied by the second non-qualified search listing 330b. If the search result list 340 includes additional non-qualified search listings, they will be provided to the reception device via a second-search-result web page (not shown), which may (or may not) include qualified search listings. For example, the second-search-result web page may include a continuing portion of the search result list including, in a preferred location, a predetermined number of qualified search listings (e.g., the search listings having the 4^{th}, 5^{th} and 6^{th} highest monetary amounts, etc.). It should be appreciated that each search listing (qualified and/or non-qualified) may further include additional information (i.e., additionally received information), such as title information (e.g., 320a, 320b, etc.) descriptive information (e.g., 322a, 332a), contact information (not shown), and/or a textual representation of the network address as to where the actual information (or further information) is located (e.g., 324a, 334a). It should also be appreciated that the network address may further be embedded within the additional information, thus making the additional information a hyperlink to the actual (or further) information. It should also be appreciated that the number of qualified and/or non-qualified search listings depicted in Figure 3 (as well as Figures 4-6) are merely provided to illustrate the environment in which the present invention may operate, and not to limit the present invention.

Another embodiment of the present invention is shown in Figure 4. Specifically, a first-search-result web page 400 is generated in response to a search inquiry 410, in which the first-search-result web page 400 includes two search result lists -- i.e., at least an originating portion of a primary search result list 440 and a sponsored search result list 450. In a preferred embodiment of the present invention, the primary search result list 440 includes only non-qualified search listings (e.g., non-paid search listings) arranged according to relevance. In other words, the non-preferred location of the primary search result list 440 is each placement position therein. Furthermore, in an embodiment of the present invention, the sponsored search result list 450 includes only qualified search listings arranged according to an algorithm (e.g., randomly, according to relevance, according to monetary amounts, etc.). In other words, the preferred location of the sponsored search result list 450 is each placement position therein. Thus, the first qualified search listing 420a (according to the algorithm) is placed in a first placement position of the sponsored search result list 450 and a last qualified search listing 420c (e.g., the third qualified search listing, etc.) is placed in a last placement position of the sponsored search result list 450.

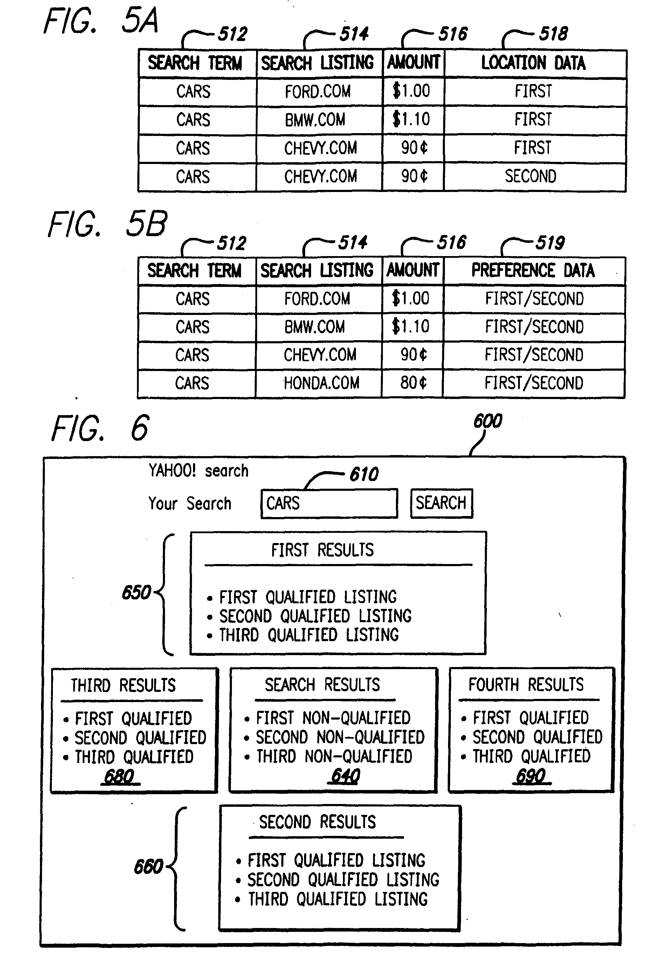

Another embodiment of the present invention is shown in Figure 5. Specifically, a first-search-result web page 500 is generated in response to a search inquiry 510, in which the first-search-result web page 500 includes a plurality of search result lists -- i.e., at least an originating portion of a primary search result list 540, a first sponsored search result list ("first search result list") and a second sponsored search result list ("second search result list"). In a preferred embodiment of the present invention, the primary search result list 540 includes only non-qualified search listings (e.g., non-paid search listings) arranged according to relevance. In other words, a first more-relevant non-qualified search listing 530a is placed in a first placement position of the primary search result list 540 and a second less-relevant non-qualified search listing 530b is placed in a second placement position of the primary search result list 540. Furthermore, in an embodiment of the present invention, the first and second search result lists 550, 560 include only qualified search listings arranged according to at least one algorithm (e.g., randomly, according to relevance, according to monetary amounts, etc.).

In one embodiment of the present invention (see Figure 1), the promoting application 114 is further adapted to receive search-result-list data (e.g., search-result-location data, search-result-preference data, etc.) from the plurality of promoting devices 130. Specifically, in one embodiment of the present invention, the promoting application 114 is adapted to receive a search term, a search listing, a monetary amount and search-result-location data from a promoting device 130, where the search-result-location data identifies at least one search result list. For example, as shown in Figure 5A, the promoting application 114 is adapted to receive a search term 512 (e.g., "cars"), a search listing 514 (e.g., www.ford.com), a monetary amount 516 (e.g., $1.00) and search-result-location data 518 (e.g., first search result list). In this example, three of the stored search listings (i.e., www.ford.com, www.bmw.com and www.chevy.com) are linked to search-result-location data identifying the first search result list (i.e., identifying an interest in being placed in the first search result list) and one of the stored search listings (i.e., www.chevy.com) is linked to search-result-location data identifying the second search result list.

Referring to Figures 1 and 5, the searching application 116 is adapted to qualify a predetermined number of search listings (in this case three) for placement in the first search result list 550 and a predetermined number of search listings (in this case three) for placement in the second search result list 560. If the items of information identified in Figure 5A were stored in the database 118, the searching application 116 would qualify www.ford.com, www.bmw.com and www.chevy.com for placement in the first search result list. This is because these three search listings are the only listings linked to the search inquiry (i.e., "cars") and to search-result-location data identifying the first search result list. The searching application 116 would then arrange the qualified search listings according to an algorithm (e.g., randomly, according to relevance, according to monetary amount, etc.)

Thus, for example, if the searching application 116 was adapted to arrange the qualified search listings randomly, any one of the three qualified search listings could be placed in the first placement position (i.e., the first qualified search listing 520a). Furthermore, if the searching application 116 was adapted to arrange the qualified search listings according to relevance, then the most-relevant search listing would be placed in the first placement position (i.e., 520a), the next-most-relevant search listing would be placed in the second placement position (i.e., 520b), and the least-relevant search listing would be placed in the third placement position (i.e., 520c). Moreover, if the searching application 116 was adapted to arrange the qualified search listings according (exclusively) to the monetary amounts linked to the qualified search listings, then www.bmw.com would be placed in the first placement position (i.e., 520a), www.ford.com would be placed in the second placement position (i.e., 520b), and www.chevy.com would be placed in the third placement position (i.e., 520c).

With respect to the second search result list 560, the searching application 116 would place www.chevy.com in the first placement position (i.e., the first qualified search listing 570a). This is because www.chevy.com is the only search listing linked to the search inquiry (i.e., "cars") and to search-result-location data identifying the second search result list, therefore qualifying the search listing for placement in the second search result list. Furthermore, because there is only one qualified search listing, it will be placed in the first placement position (e.g., 570a) regardless of the algorithm used. Thus, the second and third placement positions (e.g., 570b and 570c, respectively) of the second search result list 560 will remain empty. It should be appreciated that the search-result-location data may further identify multiple search result lists, thus indicating a desire for the search listing linked thereto to be placed in multiple search result lists.

In another embodiment of the present invention (see Figure 1), the promoting application 114 is further adapted to receive a search term, a search listing, a monetary amount and search-result-preference data from a promoting device 130, where the search-result-preference data identifies at least one preferred search result list. For example, as shown in Figure 5B, the promoting application is adapted to receive a search term 512 (e.g., "cars"), a search listing 514 (e.g., www.ford.com), a monetary amount 516 (e.g., $1.00) and search-result-preference data 518 (e.g., the first search result list is preferred over the second search result list). In this example, the three highest monetary amounts that are linked to both the "cars" search term and search-result-preference data identifying a first search result list preference are www.bmw.com, www.ford.com and www.chevy.com. While the www.honda.com search listing is linked to both the "cars" search term and search-result-preference data identifying a first search result list preference (i.e., "first/second"), it does not qualify for placement in the first search result list because its monetary amount is not in the top predetermined number of monetary amounts (i.e., in this case, the top three monetary amounts). The searching application 116 will arrange the qualified search listings for the first search result list as previously discussed.

Because www.honda.com is the only remaining search listing linked to the "cars" search term, it is qualified for placement in the second search result list. Furthermore, because there is only one search listing qualified for placement in the second search result list, it will be placed in the first placement position regardless of what algorithm being used. Thus, the second and third placement positions of the second search result list will remain empty. It should be appreciated that the search-result-preference data may identify either a preferred search result list (e.g., the first search result list) or an order of preference (e.g., the first search result list before the second search result list, etc.). It should further be appreciated that the algorithm used to arrange qualified search listings in one search result list (e.g., the first search result list, etc.) may (or may not) be the same algorithm used to arrange qualified search listings in another search result list (e.g., the second search result list, etc.).

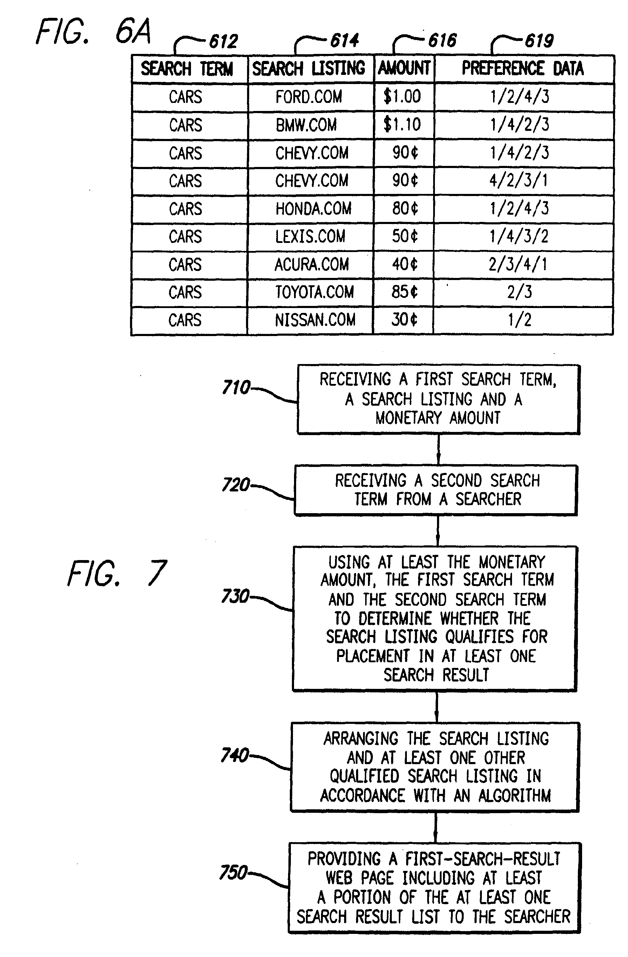

In another embodiment of the present invention, as illustrated in Figure 6, a first-search-result web page 600 is generated in response to a search inquiry 610, where the first-search-result web page 600 includes a primary search result list 640 and four sponsored search result lists -- i.e., a first search result list 650, a second search result list 660, a third search result list 680 and a fourth search results list 690. In a preferred embodiment of the present invention, the primary search result list 640 includes only non-qualified search listings (e.g., non-paid search listings) arranged according to relevance. In other words, a first more-relevant non-qualified search listing is placed in a first placement position of the primary search result list 640 and a second less-relevant non-qualified search listing is placed in a second placement position, etc. Furthermore, in a preferred embodiment of the present invention, the first, second, third and fourth search result lists 650, 660, 680 and 690 include only qualified search listing arranged according to at least one algorithm (e.g., randomly, according to relevance, according to monetary amounts, etc.).

If the promoting application 114 is adapted to receive search-result-location data, then the promoting devices (or more particularly the promoters operating the promoting devices) are able to identify at least one search result list in which the search listing is desired to be placed. Alternately, if the promoting application 114 is adapted to receive search-result-preference data, then the promoters are able to identify at least one preferred search result list.

For example, consider the information items provided in Figure 6A. The first search listing to qualify for placement (assuming the search inquiry is "cars") would be www.bmw.com, in that it is linked to the search term (i.e., "cars") and to the highest monetary amount (i.e., $1.10). Furthermore, because it is linked to search-result-preference data that identifies a preference of being placed in the first search result list (i.e., "1/4/2/3" = the first search result list over the fourth search result list, the fourth search result list over the second search result list, and the second search result list over the third search result list), www.bmw.com is qualified for placement in the first search result list. The second search listing to qualify for placement would be www.ford.com, in that it is linked to the search term ("cars") and to the second highest monetary amount (i.e., $1.00). Furthermore, because it is linked to search-result-preference data that identifies a preference of being placed in the first search result list, www.ford.com is qualified for placement in the first search result list. The next search listings to qualify for placement would be www.chevy.com (both of them), in that they are both linked to the search term and to the next highest monetary amount (i.e., 90¢). Furthermore, because these search listings identify a preference of being placed in both the first search result list and the fourth search result list, they qualify for placement accordingly (i.e., one "www.chevy.com" listing in the first list and one in the fourth list).

The fifth search listing to qualify for placement is www.toyota.com, in that it is linked to the search term and to the next highest monetary amount (i.e., 85¢). Furthermore, because this search listing identifies a preference of being placed in the second search result list, it will qualify for placement accordingly. The sixth search listing to qualify for placement is www.honda.com, in that it is linked to the search term and the next highest monetary amount (i.e., 80¢). This search listing is linked to search-result-preference data that identifies a preference of being placed in the first search result list. Since a predetermined number of search listings (e.g., three) have already been qualified for placement in the first search result list, www.honda.com cannot be placed in its preferred search result list. This listing's second preference is the second search result list, which currently has only one other qualified placement (i.e., www.tovota.com). Thus, www.honda.com qualifies for placement in the second search result list.

The seventh search listing to qualify for placement is www.lexis.com, in that it is linked to the search term and the next highest monetary amount (i.e., 50¢). This search listing, however, identifies a preference of being placed in a search result list that is full (i.e., the first search result list), thus resulting in www.lexis.com be placed in the fourth search result list (i.e., its second preference). The eighth search listing to qualify for placement is www.acura.com, in that it is linked to the search term and the next highest monetary amount (i.e., 40¢). Furthermore, because this search listing identifies a preference of being placed in the second search result list, it qualifies for placement accordingly. The ninth and last search listing to qualify for placement is www.nissan.com, in that it is linked to the search term and the next highest monetary amount (i.e., 30¢). This search listing, however, is linked to search-result-preference data that identifies a first preference of being placed in the first search result list (which is full) and a second preference of being placed in the second search result list (which is also full). Therefore, because www.nissan.com only identifies two search result lists (both of which are full), it cannot qualify for placement.

Once the search listings are qualified, they are arranged according to at least one algorithm (e.g., randomly, according to relevance, according to monetary amounts, etc.). Specifically, www.ford.com, www.bmw.com and www.chevy.com will be arranged in the first search result list 650 according to a first algorithm, www.honda.com, www.acura.com and www.toyota.com will be arranged in the second search result list 660 according to a second algorithm, and www.chevy.com and www.lexis.com will be arranged in the fourth search result list 690 according to a third algorithm. Thus, the third placement position of the fourth search result list 690 and all three placement positions of the third search result list 680 will remain empty. It should be appreciated that, given this situation, the third search result list may be excluded from the first-search-result web page 600 in its entirety.

In another embodiment of the present invention (see Figure 1), the promoting application 114 may further be adapted to perform additional functions for, and/or provide additional information to, at least one promoting device 130. For example, the promoting application, may be adapted to bid (or accepting monetary amounts) on behalf of the promoting device. In this embodiment, the monetary amount provided by the promoting device (i.e., received by the promoting application and linked to a search term) would be a maximum-monetary-amount. Thus, the promoting application would be adapted to bid (or accept) monetary amounts up to, but not over, the maximum-monetary-amount. Moreover, the promoting application may be adapted to notify the promoting device in response to changed conditions (e.g., a change in a search listing's qualification, a change in a search listing's placement position, the end of a placement period, etc.). Moreover, the promoting application may further be adapted to provide the promoting device with additional information (e.g., statistical information on the promoter's account and/or search listing(s), estimating the cost of placing or accepting a monetary amount, reports/analysis on particular aspects of the searching system (e.g., search terms, demographics, etc.), etc.). It should be appreciated that these features may (or may not) be performed/provided in real-time.

One method of qualifying a search listing for placement in at least one search result list is illustrated in Figure 7. Specifically, at steps 710 and 720, a first search term, a second search term, a search listing and a monetary amount are received. The second search term, along with at least the monetary amount and the first search term are used, at step 730, to qualify the search listing for placement in at least one search result list. For example, if the first search term and the second search term are identical (or substantially similar) and the monetary amount is relatively high, then the search listing is qualified for placement in the at least one search result list. At step 740, the search listing (assuming it has been qualified for placement) is arranged in accordance with an algorithm. Finally, at step 750, a first-search-result web page including at least a portion of the at least one search result is provided.

In another embodiment of the present invention, search-result-list data (e.g., search-result-location data, search-result-preference data, etc.) is further received at step 710. At step 730, the monetary amount, the first search term and the second search term are used to qualify the search listing for at least one of a plurality of search result lists. And, at step 750, a first-search-result web page is provided to the searcher, where the first-search-result web page includes the plurality of search result lists. For example, the web page may include a number of search result lists (e.g., first, second, third, etc.) placed relative to a primary search result list (e.g., on top of, in the upper right-hand corner of, to the left of, etc.).

Having thus described a preferred embodiment of a system and method for placing a search listing in a preferred location of at least one search result list and ordering the preferred location according to an algorithm, it should be apparent to those skilled in the art that certain advantages of the system have been achieved. It should also be appreciated that various modifications, adaptations, and alternative embodiments thereof may be made within the scope and spirit of the present invention. The invention is further defined by the following claims.

## Claims

1. A searching system for placing search listings in at least one search result list, comprising:
a search server (112) adapted to communicate with a plurality of reception devices (120) and a plurality of promoting devices (130) via a wide area network (100);
a promoting application (114) adapted to receive a plurality of search terms, search listings and monetary amounts from said plurality of promoting devices, each one of said plurality of monetary amounts being associated with corresponding ones of said plurality of search terms and said plurality of search listings;
a database (118) for storing said plurality of search listings and monetary amounts such that said each one of said plurality of monetary amounts is linked with said corresponding ones of said plurality of search terms and said plurality of search listings; and
a searching application (116) adapted to:
receive a search inquiry from one of said plurality of reception devices;
use at least monetary amounts stored in said database and linked to said search term to qualify no more than a predetermined number of search listings for said at least one search result list;
place said qualified search listings in at least one preferred location of said at least one search result list;
arrange said qualified listings in accordance with at least one algorithm, said at least one algorithm being independent of monetary amounts linked to said qualified search listings; and
provide a first-search-result web page including at least an originating portion of said at least one search result list to said one of said plurality of reception devices.

2. The searching system of Claim 1, wherein said at least one algorithm is adapted to arrange said qualified search listings randomly.

3. The searching system of Claim 1, wherein said at least one algorithm is adapted to arrange a more-relevant one of said qualified search listings before a less-relevant one of said qualified search listings.

4. The searching system of any one of the preceding claims, wherein said searching application is further adapted to place non-qualified search listings in a non-preferred location of said at least one search result list and arrange said non-qualified search listings according to their relevancy to said search inquiry.

5. The searching system of any one of the preceding claims, wherein said promoting application is further adapted to host an electronic auction by enabling said plurality of promoting devices to bid on at least one of said plurality of search terms.

6. The searching system of any one of the preceding claims, wherein said promoting application is further adapted to determine at least one fixed monetary amount corresponding to each one of said plurality of search terms.

7. The searching system of Claim 5, wherein each one of said plurality of monetary amounts comprises an amount paid by a corresponding promoter if a corresponding search listing is placed in one of said at least one preferred location.

8. The searching system of Claim 5, wherein each one of said plurality of monetary amounts comprises an amount paid by a corresponding promoter if a corresponding search listing is placed in one of said at least one preferred location and interacted with by said one of said plurality of reception devices.

9. The searching system of any one of the preceding claims, wherein said searching application is further adapted to use historical information stored in said database to qualify no more than a predetermined number of search listings.

10. The searching system of any one of claims 1 to 9, wherein:
said at least one search result list includes a primary search result list and a sponsored search result list, said sponsored search result list being located above an originating portion of said primary search result on said first-search-result web page; and
said searching application is further adapted to place non-qualified search listings in said primary search result list.

11. The searching system of any one of claims 1 to 9, wherein:
said at least one search result list includes multiple search result lists; and
said promoting application is further adapted to receive search-result-location data from said plurality of promoting devices, said search-result-location data being stored in said database and used by said searching application to place qualified search listings in at least one of said multiple search result lists.

12. The searching system of Claim 11, wherein:
said at least one search result list further includes a primary search result list originating on said first-search-result web page; and
said searching application is further adapted to place non-qualified search listings in said primary search result list.

13. The searching system of Claim 12, wherein said searching application is further adapted to use said search-result-location data to qualify no more than a predetermined number of search listings for each one of said multiple search result lists.

14. The searching system of Claim 13, wherein said multiple search result lists include a first search result list located above an originating portion of said primary search result list on said first-search-result web page and a second search result list located below said originating portion of said primary search result list on said first-search-result web page.

15. The searching system of Claim 13, wherein said multiple search result lists include a first search result list located to the left of an originating portion of said primary search result list on said first-search-result web page and a second search result list located to the right of said originating portion of said primary search result list on said first-search-result web page.

16. The searching system of Claim 14, wherein said multiple search result lists further includes a third search result list located to the left of said originating portion of said primary search result list on said first-search-result web page and a fourth search result list located to the right of said originating portion of said primary search result list on said first-search-result web page.

17. The searching system of Claim 16, wherein said at least one algorithm is adapted to arrange said qualified search listings randomly.

18. The searching system of Claim 16, wherein said at least one algorithm is adapted to arrange a more-relevant one of said qualified search listings before a less-relevant one of said qualified search listings.

19. The searching system of any one of claims 1 to 9, wherein:
said at least one search result list includes multiple search result lists; and
said promoting application is further adapted to receive search-result-preference data from said plurality of promoting devices, each one of said search-result-preference data identifying at least one of said multiple search result lists and being stored in said database.

20. The searching system of Claim 19, wherein said searching application is further adapted to place each one of said qualified search listings in a particular one of said multiple search result lists in accordance with corresponding ones of said plurality of monetary amounts and search-result-preference data.

21. The searching system of Claim 20, wherein:
said at least one search result list further includes a primary search result list originating on said first-search-result web page; and
said searching application is further adapted to place non-qualified search listings in said primary search result list.

22. The searching system of Claim 21, wherein said multiple search result lists include a first search result list located above an originating portion of said primary search result list on said first-search-result web page and a second search result list located below said originating portion of said primary search result list on said first-search-result web page

23. The searching system of Claim 21, wherein said multiple search result lists include a first search result list located to the left of an originating portion of said primary search result list on said first-search-result web page and a second search result list located to the right of said originating portion of said primary search result list on said first-search-result web page.

24. The searching system of Claim 22, wherein said multiple search result lists further includes a third search result list located to the left of said originating portion of said primary search result list on said first-search-result web page and a fourth search result list located to the right of said originating portion of said primary search result list on said first-search-result web page.

25. The searching system of Claim 24, wherein said at least one algorithm is adapted to arrange said qualified search listings randomly.

26. The searching system of Claim 24, wherein said at least one algorithm is adapted to arrange a more-relevant one of said qualified search listings before a less-relevant one of said qualified search listings.

27. A searching system for placing qualified search listings in a plurality of search result lists, comprising:
a search server (112) adapted to communicate with a plurality of reception devices (120) and a plurality of promoting devices (130) via a wide area network (100);
a promoting application (114) adapted to receive a plurality of search terms, search listings, search-result-list data and monetary amounts from said plurality of promoting devices, each one of said plurality of monetary amounts being associated with corresponding ones of said plurality of search terms, search-result-list data and search listings;
a database (118) for storing said plurality of search listings, search-result-list data and monetary amounts such that said each one of said plurality of monetary amounts is linked with said corresponding ones of said plurality of search terms, search-result-list data and search listings; and
a searching application (116) adapted to:
receive a search inquiry from one of said plurality of reception devices;
use at least monetary amounts stored in said database and linked to said search term to qualify no more than a predetermined number of search listings for each one of said plurality of search result lists;
use at least search-result-list data stored in said database and linked to said qualified search listings to place each one of said qualified search listings in at least one of said plurality of search result lists;
arrange said qualified listings in accordance with at least one algorithm;
place non-qualified search listings relevant to said search inquiry in a primary search result list; and
provide a first-search-result web page to said one of said plurality of reception devices, said first-search-result web page including at least an originating portion of said primary search result list and at least portions of said plurality of search result lists.

28. The searching system of Claim 27, wherein said at least one algorithm is adapted to arrange said qualified search listings randomly.

29. The searching system of Claim 27, wherein said at least one algorithm is adapted to arrange at least a more-relevant one of said qualified search listings before at least a less-relevant one of said qualified search listings.

30. The searching system of any one of claims 27 to 29, wherein said at least one algorithm is adapted to use at least the monetary amounts linked to said qualified search listings to arrange said qualified search listings.

31. The searching system of any one of claims 27 to 30, wherein said promoting application is further adapted to host an electronic auction by enabling said plurality of promoting devices to bid on at least one of said plurality of search terms.

32. The searching system of any one of claims 27 to 31, wherein each one of said plurality of monetary amounts comprises an amount to be paid if a corresponding search listing is placed in one of said plurality of search result lists.

33. The searching system of Claim 31, wherein each one of said plurality of monetary amounts comprises an amount to be paid if a corresponding search listing is placed in one of said plurality of search result lists and interacted with by said one of said plurality of reception devices.

34. The searching system of any one of claims 27 to 33, wherein said searching application is further adapted to use historical information stored in said database to qualify no more than said predetermined number of search listings.

35. The searching system of any one of claims 27 to 34, wherein each one of said plurality of search-result-list data includes search-result-location data, said search-result-location data identifying at least one of said plurality of search result lists.

36. The searching system of any one of claims 27 to 34, wherein each one of said plurality of search-result-list data includes search-result-preference data, said search-result-preference data identifying at least a preferred one of said plurality of search result lists.

37. The searching system of any one of claims 27 to 36, wherein said plurality of search result lists include a first search result list located above an originating portion of said primary search result list on said first-search-result web page and a second search result list located below said originating portion of said primary search result list on said first-search-result web page.

38. The searching system of any one of claims 27 to 36, wherein said plurality of search result lists include a first search result list located to the left of an originating portion of said primary search result list on said first-search-result web page and a second search result list located to the right of said originating portion of said primary search result list on said first-search-result web page.

39. The searching system of Claim 37, wherein said plurality of search result lists further include a third search result list located to the left of said originating portion of said primary search result list on said first-search-result web page and a fourth search result list located to the right of said originating portion of said primary search result list on said first-search-result web page.

40. A method of placing a search listing in at least one search result list, comprising:
receiving a first search term (222), a search listing (224) and a monetary amount (226) from a promoter of said search listing;
storing said search term, said search listing and said monetary amount;
receiving a second search term from a searcher;
using at least said monetary amount, said first search term and said second search term to determine whether said search listing qualifies for placement in at least one preferred location (350) of at least one search result list (340), said at least one preferred location including a predetermined number of placement positions;
arranging said search listing and at least one other qualified search listing in said at least one preferred location of said at least one search result list according to an algorithm if said search listing qualifies for placement in said at least one search result list, said algorithm being independent of said monetary amount; and
providing a first-search-result web page (300) including at least a portion of said at least one search result list to said searcher.

41. The method of Claim 40, further comprising the step of providing at least said first search term to said promoter before said first search term is received.

42. The method of Claim 40 or 41, wherein said step of storing said search term, said search listing and said monetary amount further includes linking said search term and said monetary amount to said search listing.

43. The method of Claim 40, 41 or 42, wherein said step of using at least said monetary amount, said first search term and said second search term to determine whether said search listing qualifies for placement in at least one preferred location further includes determining whether said first search term and said second search term are equal and whether said monetary amount is relatively high.

44. The method of Claim 43, wherein said step of using at least said monetary amount, said first search term and said second search term to determine whether said search listing qualifies for placement in at least one preferred location further includes using historical information if said monetary amount is tied with at least one other monetary amount linked to said at least one other search listing.

45. The method of any one of claims 40 to 44, wherein said step of arranging said search listing and at least one other qualified search listing further includes arranging said search listing and said at least one other qualified search listing in said at least one preferred location of said at least one search result list randomly.

46. The method of any one of claims 40 to 44, wherein said step of arranging said search listing and at least one other qualified search listing further includes arranging said search listing before said at least one other qualified search listing if said search listing is more relevant than said at least one other qualified search listing.

47. The method of any one of claims 40 to 46, wherein said step of providing a first-search-result web page further includes providing a first-search-result web page including at least an originating portion of a primary search result list and said at least one search result list substantially above said primary search result list to said searcher, said primary search result list including at least non-qualified relevant search listings.

48. The method of any one of claims 40 to 47, wherein said step of receiving a first search term, a search listing and a monetary amount further includes receiving search-list-location data identifying at least one particular one of said at least one search result list, and said step of using at least said monetary amount, said first search term and said second search term further includes using said search-list-location data to qualify said search listing for placement in said at least one particular one of said at least one search result list.

49. The method of Claim 48, wherein said step of providing a first-search-result web page further includes providing said first-search-result web page including at least an originating portion of a primary search result list and at least a first search result list above said primary search result list, said search listing appearing in said first search result list if said search-list-location data identifies at least said first search result list and said search listing qualifies for placement in said first search result list.

50. The method of Claim 49, wherein said step of providing a first-search-result web page further includes providing said first-search-result web page including at least a second search result list below said primary search result list, said search listing appearing in said second search result list if said search-list-location data identifies at least said second search result list and said search listing qualifies for placement in said second search result list.

51. The method of Claim 50, wherein said step of providing a first-search-result web page further includes providing said first-search-result web page including at least a third search result list to the left of said primary search result list, said search listing appearing in said third search result list if said search-list-location data identifies at least said third search result list and said search listing qualifies for placement in said third search result list.

52. The method of Claim 51, wherein said step of providing a first-search-result web page further includes providing said first-search-result web page including at least a fourth search result list to the right of said primary search result list, said search listing appearing in said fourth search result list if said search-list-location data identifies at least said fourth search result list and said search listing qualifies for placement in said fourth search result list.

53. The method of any one of claims 40 to 52, wherein said step of receiving a first search term, a search listing and a monetary amount further includes receiving search-list-preference data identifying at least one preferred one of said at least one search result list, and said step of using at least said monetary amount, said first search term and said second search term further includes using said search-list-preference data to qualify said search listing for placement in said at least one search result list.

54. The method of Claim 53, wherein said step of providing a first-search-result web page further includes providing said first-search-result web page including at least an originating portion of a primary search result list and at least a first search result list above said primary search result list, said search listing appearing in said first search result list if said search listing qualifies for placement in said first search result list.

55. The method of Claim 54, wherein said step of providing a first-search-result web page further includes providing said first-search-result web page including at least a second search result list below said primary search result list, said search listing appearing in said second search result list if said search listing qualifies for placement in said second search result list.

56. The method of Claim 55, wherein said step of providing a first-search-result web page further includes providing said first-search-result web page including at least a third search result list to the left of said primary search result list, said search listing appearing in said third search result list if said search listing qualifies for placement in said third search result list.

57. The method of Claim 56, wherein said step of providing a first-search-result web page further includes providing said first-search-result web page including at least a fourth search result list to the right of said primary search result list, said search listing appearing in said fourth search result list if said search listing qualifies for placement in said fourth search result list.

58. A method of placing a search listing in at least one of a plurality of search result lists, comprising:
receiving a first search term (222), a search listing (224), a monetary amount (226) and search-result-list data from a promoter of said search listing;
receiving a second search term from a searcher;
using at least said monetary amount, said first search term and said second search term to determine whether said search listing qualifies for placement in at least one preferred location (350) of at least one of a plurality of search result lists (340);
arranging said search listing and at least one other qualified search listing in said at least one preferred location of said at least one of said plurality of search result lists according to an algorithm if said search listing is qualified for placement in said at least one of said plurality of search result lists, and
providing a first-search-result web page (300) including at least an originating portion of a primary search result list and at least portions of said plurality of search result lists to said searcher, said primary search result list including at least non-qualified relevant search listings.

59. The method of Claim 58, wherein said step of arranging said search listing and at least one other qualified search listing further includes arranging said search listing and said at least one other qualified search listing randomly.

60. The method of Claim 58, wherein said step of arranging said search listing and at least one other qualified search listing further includes arranging said search listing before said at least one other qualified search listing if said search listing is more relevant to said search term than said at least one other qualified search listing.

61. The method of Claim 58, wherein said step of arranging said search listing and at least one other qualified search listing further includes arranging said search listing and said at least one other qualified search listing according to at least said monetary amount and at least one other monetary amount linked to said at least one other qualified search listing.

62. The method of Claim 58, wherein said step of receiving a first search term, a search listing, a monetary amount and search-result-list data further includes receiving search-result-location data, said search-result-location data identifying at least one particular one of said plurality of search result lists and used together with said monetary amount, said first search term and said second search term to determine whether said search listing qualifies for placement in a preferred location of said particular one of said plurality of search result lists.

63. The method of Claim 58, wherein said step of receiving a first search term, a search listing, a monetary amount and search-result-list data further includes receiving search-result-preference data, said search-result-preference data identifying at least a most-preferred one of said plurality of search result lists and used together with said monetary amount, said first search term and said second search term to determine whether said search listing qualifies for placement in a preferred location of said most-preferred one of said plurality of search result lists.

64. The method of Claim 58, wherein said step of providing a first-search-result web page further includes providing a first-search-result web page including a first search result list above said originating portion of said primary search result list and a second search result list below said originating portion of said primary search result list to said searcher.

65. The method of Claim 58, wherein said step of providing a first-search-result web page further includes providing a first-search-result web page including a first search result list to the left of said originating portion of said primary search result list and a second search result list to the right of said originating portion of said primary search result list to said searcher.

66. The method of Claim 64, wherein said step of providing a first-search-result web page further includes providing a first-search-result web page including a third search result list to the left of said originating portion of said primary search result list and a fourth search result list to the right of said originating portion of said primary search result list to said searcher.
